# EUROPEAN PATENT APPLICATION

(11) **EP 2 945 433 A1**
(43) Date of publication of application: **18.11.2015**
(21) Application number: 13798031.4
(22) Date of filing: 29.07.2013
(51) Int. Cl.: H04W 48/20

(54) **WIRELESS COMMUNICATION HOTSPOT CREATION AND CONNECTION METHOD, HOTSPOT CREATION END AND HOTSPOT CONNECTION END**

(30) Priority: 14.01.2013 CN 201310012741
(71) Applicant: ZTE Corporation, Shenzhen, Guangdong 518057 (CN)
(72) Inventor: ZHU, Yuan, Shenzhen Guangdong 518057 (CN); ZHANG, Chi, Shenzhen Guangdong 518057 (CN); TANG, Shaojian, Shenzhen Guangdong 518057 (CN); FAN, Yong, Shenzhen Guangdong 518057 (CN); YANG, Jie, Shenzhen Guangdong 518057 (CN); HE, Wenfeng, Shenzhen Guangdong 518057 (CN); DENG, Chen, Shenzhen Guangdong 518057 (CN); ZHANG, Zhenyu, Shenzhen Guangdong 518057 (CN); FU, Qihong, Shenzhen Guangdong 518057 (CN)
(74) Representative: Tischner, Oliver
(86) International application number: PCT/CN2013/080348
(87) International publication number: WO 2013/178179

(57) **Abstract**

Disclosed are a wireless communication hotspot creation and connection method, a hotspot creation end and a hotspot connection end. By encrypting a user name at a hotspot creation end to generate a hotspot name, the method configures a wireless communication parameter for the hotspot name generated by encryption to establish a wireless communication hotspot so as to enable a hotspot connection end to access the established wireless communication hotspot by decrypting the hotspot name, ensures that WiFi hotspot creation and automatic recognition are achieved between two or more terminals, and then achieves accurate WiFi interconnection.

## Description

### TECHNICAL FIELD

The disclosure relates to a wireless communication technology, and in particular to a wireless communication hotspot creation and connection method, a hotspot creation end and a hotspot connection end.

### BACKGROUND

Wireless Fidelity (Wi-Fi) is a short-haul wireless communication technology proposed by the Wireless Ethernet Compatibility Alliance (WECA). By this technology, a radio signal can be transmitted within a range of 100m. The Wi-Fi usually works at a frequency of 2.4 Ghz, and can support a data transmission speed up to 11Mbps. By using the Wi-Fi technology, a user can access the Internet via a user terminal supporting the Wi-Fi. Thus, the Wi-Fi is widely utilized in dining halls, homes, offices and other places.

An Access Point (AP) which provides a Wi-Fi connection is called a Wi-Fi hotspot (namely a wireless communication hotspot), and is usually implemented by a wireless router. At present, most of personal computers, handheld devices (e.g., Personal Digital Assistants (PDAs) and mobile phones) and other terminals are integrated with a Wi-Fi module, and can access the Internet by connecting to the Wi-Fi hotspot provided by the wireless router, thereby increasing an accessing speed and saving cost. With the improvement of hardware performance of terminal devices, many terminal devices, such as smart phones, have a capacity of Wi-Fi hotspot creation.

However, there is not a direct and safe wireless communication hotspot creation and connection solution yet on the market, which can implement creation and automatic recognition of the Wi-Fi hotspot between two or more terminals without dependence on any other network devices so as to achieve accurate Wi-Fi interconnection.

### SUMMARY

The disclosure is mainly intended to provide a wireless communication hotspot creation method, so as to ensure that creation and automatic recognition of the Wi-Fi hotspot are implemented between two or more terminals without dependence on any other network devices so as to achieve accurate Wi-Fi interconnection.

In addition, the disclosure also provides a hotspot creation end for implementing wireless communication hotspot creation, so as to ensure that creation and automatic recognition of a Wi-Fi hotspot are implemented between two or more terminals without dependence on any other network devices so as to achieve accurate Wi-Fi interconnection.

In addition, the disclosure also provides a wireless communication hotspot connection method, so as to ensure that creation and automatic recognition of a Wi-Fi hotspot are implemented between two or more terminals without dependence on any other network devices so as to achieve accurate Wi-Fi interconnection.

In addition, the disclosure also provides a hotspot connection end for implementing wireless communication hotspot connection, so as to ensure that creation and automatic recognition of a Wi-Fi hotspot are implemented between two terminals or among more terminals without dependence on any other network devices so as to achieve accurate Wi-Fi interconnection.

The wireless communication hotspot creation method includes the following steps. The hotspot creation end responds to a wireless communication hotspot creation instruction to obtain a user name. The hotspot creation end encrypts the obtained user name to obtain a hotspot name. The hotspot creation end configures wireless communication parameters for the obtained hotspot name to establish a wireless communication hotspot. The hotspot creation end broadcasts a wireless communication connection invitation via the established wireless communication hotspot, so as to enable a hotspot connection end to access the established wireless communication hotspot by decrypting the hotspot name.

The hotspot creation end includes: a wireless communication unit configured to send and/or receive a wireless communication signal; an input/output unit configured to provide a human-computer interaction interface for a user to input an instruction, and for outputting and displaying response data of the hotspot creation end to the instruction input by the user; a hotspot creation module configured to respond to a wireless communication hotspot creation instruction to obtain a user name, encrypt the obtained user name to obtain the hotspot name, configure wireless communication parameters for the obtained hotspot name to establish a wireless communication hotspot, and control the wireless communication unit to broadcast a wireless communication connection invitation via the established wireless communication hotspot, so as to enable a hotspot connection end to access the established wireless communication hotspot by decrypting the hotspot name; and a processing unit configured to call and execute the hotspot creation module.

The wireless communication hotspot connection method includes the following steps: responding to a wireless communication hotspot searching instruction to search out one or more wireless communication connection invitations which are being broadcasted; decrypting one or more hotspot names of one or more wireless communication hotspots corresponding to the one or more searched wireless communication connection invitations to original texts, and displaying the decrypted original texts for the user to select; responding to a selection instruction of the user to the displayed original texts of the hotspot names; receiving connection permission information from the user; determining, according to the received connection permission information, whether it is permitted to establish a communication connection with the wireless communication hotspot corresponding to the selected original text of the hotspot name; and establishing the communication connection with the wireless communication hotspot corresponding to the selected original text of the hotspot name when it is permitted.

The hotspot connection end includes: a wireless communication unit configured to send and/or receive the wireless communication signal; an input/output unit configured to provide the human-computer interaction interface for the user to input the instruction, and for outputting and displaying response data of the hotspot connection end to the instruction input by the user; a hotspot connection module configured to respond to a wireless communication hotspot searching instruction, control the wireless communication unit to search out one or more the wireless communication connection invitations which are being broadcasted, decrypt one or more hotspot names of one or more wireless communication hotspots corresponding to the one or more searched wireless communication connection invitations to the original texts, display the decrypted original texts for the user to select, respond to the selection instruction of the user to the displayed original texts of the hotspot names, receive the connection permission information of the user, determine, according to the received connection permission information, whether it is permitted to establish the communication connection with the wireless communication hotspot corresponding to the selected original text of the hotspot name, and control the wireless communication unit to establish the communication connection with the wireless communication hotspot corresponding to the selected original text of the hotspot name when it is permitted; and a processing unit configured to call and execute the hotspot connection module.

Compared with the prior art, the embodiments of the invention encrypt the user name at the hotspot creation end to generate the hotspot name, configure the wireless communication parameters for the hotspot name generated by encryption to establish the wireless communication hotspot so as to enable the hotspot connection end to access the established wireless communication hotspot by decrypting the hotspot name, ensure that creation and automatic recognition of the Wi-Fi hotspot are implemented between two or more terminals without dependence on any other network devices, and then achieve accurate Wi-Fi interconnection.

### BRIEF DESCRIPTION OF THE DRAWINGS

Fig. 1 is a functional structure diagram of a hotspot creation end for implementing wireless communication hotspot creation according to an embodiment of the disclosure;
Fig. 2 is a functional structure diagram of a hotspot connection end for implementing wireless communication hotspot connection according to an embodiment of the disclosure;
Fig. 3 is a specific implementation flowchart of a wireless communication hotspot creation method according to an embodiment of the disclosure; and
Fig. 4 is a specific implementation flowchart of a wireless communication hotspot connection method according to an embodiment of the disclosure.

### DETAILED DESCRIPTION

It should be understood that specific embodiments described here are only used for illustrating the disclosure and not intended to limit the disclosure.

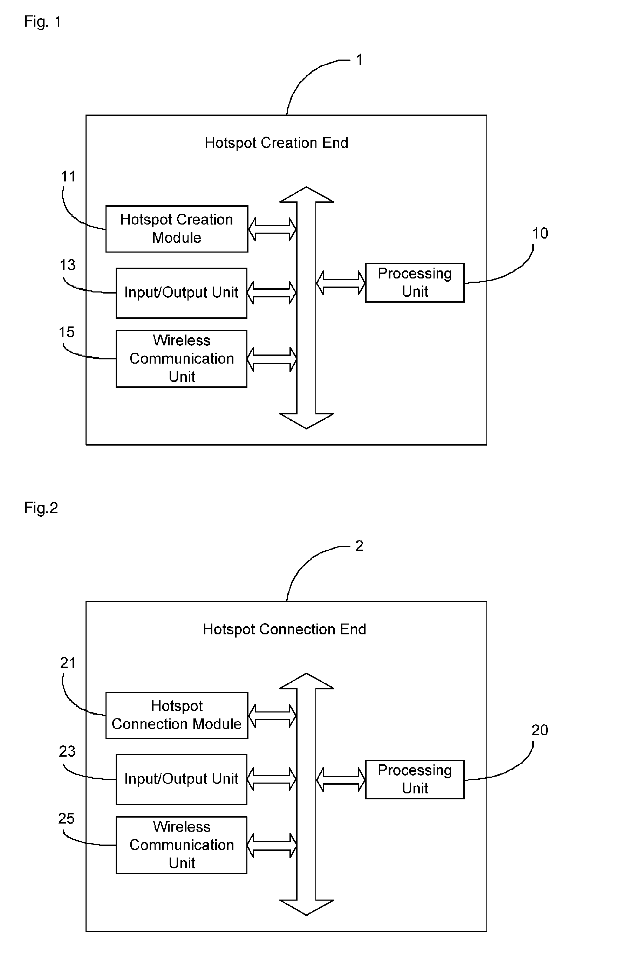

Fig. 1 is a functional structure diagram of a hotspot creation end for implementing wireless communication hotspot creation according to an embodiment of the disclosure. The hotspot creation end 1 includes the processing unit 10, the input/output unit 13, the hotspot creation module 11 and the wireless communication unit 15. In the embodiment, the hotspot creation end 1 can be a mobile phone, a computer, a tablet computer, a PDA or any other applicable terminal. In the embodiment, when it is needed to establish the wireless communication hotspot (e.g., the Wi-Fi hotspot) in a terminal for other terminals to access, this terminal is called the hotspot creation end, and other terminals which have accessed or are waiting for accessing the hotspot creation end are called the hotspot connection ends. A functional structure of the hotspot connection end will be described below with reference to Fig. 2.

The wireless communication unit 15 is configured to send and/or receive the wireless communication signal.

The input/output unit 13 is configured to provide the human-computer interaction interface for the user to input the instruction, and for outputting and displaying the response data of the hotspot creation end 1 to the instruction input by the user. In the embodiment, the human-computer interaction interface includes, but is not limited to, a software usage interface and/or a parameter setting interface.

The processing unit 10 is configured to call and execute the hotspot creation module 11 to respond to the hotspot creation instruction from the user, establish the wireless communication hotspot for the hotspot creation end 1 by encrypting the hotspot name, and control the wireless communication unit 15 to broadcast the wireless communication connection invitation via the established wireless communication hotspot.

The hotspot creation module 11 is configured to respond to the wireless communication hotspot creation instruction to obtain the user name.

In the embodiment, the hotspot creation module 11 responds to the wireless communication hotspot creation instruction according to the steps of providing the wireless communication hotspot creation instruction activating interface (e.g., a menu option or a desktop icon) and detecting and responding to the wireless communication hotspot creation instruction which is issued by the user through the wireless communication hotspot creation instruction activating interface. In other embodiments of the disclosure, the hotspot creation module 11 responds to the wireless communication hotspot creation instruction according to any other applicable steps.

In the embodiment, the hotspot creation module 11 obtains the user name according to the steps of obtaining the default saved user name and providing options so as to set the user name when the user name is set for the first time or needs to be reset.

The hotspot creation module 11 is further configured to encrypt the obtained user name to obtain the hotspot name, configure the wireless communication parameters for the obtained hotspot name to establish the wireless communication hotspot (e.g., the Wi-Fi hotspot), and control the wireless communication unit 15 to broadcast the wireless communication connection invitation via the established wireless communication hotspot, so as to enable the hotspot connection end 2 to access the established wireless communication hotspot by decrypting the hotspot name.

In the embodiment, an encryption algorithm is a reciprocal cipher algorithm which is a kind of special encryption algorithm in the cryptography. This encryption algorithm is a reverse function of its own, so its decryption algorithm is equal to the encryption algorithm. That is to say, in order to decrypt a ciphertext obtained by the reciprocal cipher algorithm, the decryption algorithm which is the same as the encryption algorithm is used and thus a plaintext can be obtained. In other word, the original text is restored after two continuous reciprocal cipher calculations. In other embodiments of the disclosure, the encryption algorithm can also be any other applicable algorithm.

Preferably, for better ensuring the security of the established wireless communication hotspot, the hotspot creation module 11 encrypts the obtained user name to obtain the hotspot name according to the steps of adding a specific identity recognition mark to the obtained user name so as to obtain a character string with the identity recognition mark and encrypting the character string with the identity recognition mark to obtain an encrypted character string (namely the hotspot name).

In the embodiment, the wireless communication parameters include a connection password, a connection authentication method and so on. In other embodiments of the disclosure, the wireless communication parameters include any other applicable parameters.

Fig. 2 is a functional structure diagram of the hotspot connection end for implementing wireless communication hotspot connection according to an embodiment of the disclosure. The hotspot connection end 2 includes the processing unit 20, the input/output unit 23, the hotspot connection module 21 and the wireless communication unit 25. In the embodiment, the hotspot connection end 2 can be a mobile phone, a computer, a tablet computer, a PDA or any other applicable terminal.

The wireless communication unit 25 is configured to send and/or receive the wireless communication signal.

The input/output unit 23 is configured to provide the human-computer interaction interface for the user to input the instruction, and for outputting and displaying the response data of the hotspot creation end 2 to the instruction input by the user. In the embodiment, the human-computer interaction interface includes, but is not limited to, the software usage interface and/or the wireless communication hotspot connecting interface.

The processing unit 20 is configured to call and execute the hotspot connection module 21, so as to respond to the wireless communication hotspot searching instruction from the user to search for, for the hotspot connection end 2, the wireless communication connection invitations on broadcast, display the found original texts of the hotspot names corresponding to the wireless communication connection invitations for the user to select, respond to the selection instruction from the user, and control the wireless communication unit 15 to establish the communication connection with the corresponding hotspot creation end 1.

The hotspot connection module 21 is configured to respond to the wireless communication hotspot searching instruction, and control the wireless communication unit 25 to search for the wireless communication connection invitations on broadcast.

In the embodiment, the hotspot connection module 21 responds to the wireless communication hotspot searching instruction according to the steps of providing the wireless communication hotspot searching instruction activating interface (e.g., the menu option or the desktop icon) and detecting and responding to the wireless communication hotspot searching instruction which is issued by the user through the wireless communication hotspot searching instruction activating interface. In other embodiments of the disclosure, the hotspot connection module 21 responds to the wireless communication hotspot searching instruction according to any other applicable steps.

The hotspot connection module 21 is further configured to decrypt the hotspot names of the wireless communication hotspots corresponding to the searched wireless communication connection invitations to the original texts, and display the decrypted original texts for the user to select.

In the embodiment, the encryption algorithm is the reciprocal cipher algorithm which is a kind of special encryption algorithm in the cryptography. This encryption algorithm is a reverse function of its own, so its decryption algorithm is equal to the encryption algorithm. That is to say, in order to decrypt the ciphertext obtained by the reciprocal cipher algorithm, the decryption algorithm which is the same as the encryption algorithm is used and thus the plaintext can be obtained. In other word, the original text is restored after two continuous reciprocal cipher calculations. In other embodiments of the disclosure, the encryption algorithm can also be any other applicable algorithm.

Preferably, for better ensuring the security of the wireless communication hotspot connection, the hotspot connection module 21 displays the decrypted original texts for the user to select according to the steps of determining whether the decrypted original texts include the specific identity recognition marks; displaying the decrypted original texts for the user to select when the decrypted original texts include the specific identity recognition marks; or, not displaying the decrypted original texts when the decrypted original texts do not include the specific identity recognition marks.

The hotspot connection module 21 is further configured to respond to the selection instruction from the user to the displayed original texts of the hotspot names, and receive the connection permission information from the user. The connection permission information includes, but is not limited to, the connection password.

The hotspot connection module 21 is further configured to determine, according to the received connection permission information, whether the hotspot connection end 2 has permission to establish the communication connection with the wireless communication hotspot corresponding to the selected original text of the hotspot name, and control the wireless communication unit 25 to establish the communication connection with the wireless communication hotspot corresponding to the selected original text of the hotspot name when the hotspot connection end 2 has permission to establish the communication connection with the wireless communication hotspot corresponding to the selected original text of the hotspot name.

In the embodiment, the hotspot connection module 21 determines whether the hotspot connection end 2 has permission to establish the communication connection with the wireless communication hotspot corresponding to the selected original text of the hotspot name by analysing whether the received connection permission information matches with the wireless communication parameters of the wireless communication hotspot corresponding to the selected original text of the hotspot name.

Note that, when the hotspot connection end does not have permission to establish the communication connection with the wireless communication hotspot corresponding to the selected original text of the hotspot name, the hotspot connection module 21 has multiple processing modes, in which two modes are illustrated below.
Mode 1: When the hotspot connection module 21 receives the connection permission information from the user less than a pre-set number of times, it continues to receive the connection permission information of the user; or when the hotspot connection module 21 receives the connection permission information of the user the pre-set number of times, it waits for responding to a new selection instruction from the user to the displayed original texts of the hotspot names.
Mode 2: The hotspot connection module 21 directly waits for responding to the new selection instruction from the user to the displayed original texts of the hotspot names.

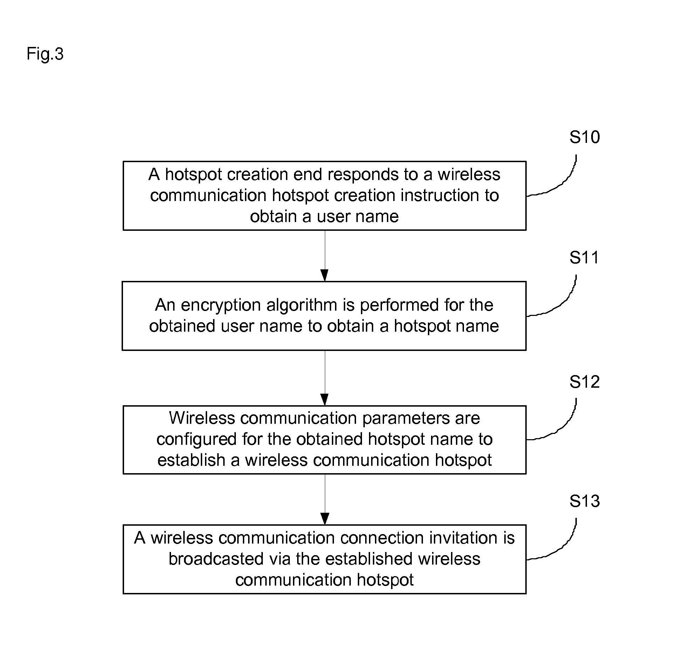

Fig. 3 is a specific implementation flowchart of the wireless communication hotspot creation method according to an embodiment of the disclosure.

Note that, Fig. 3 only shows a preferred embodiment. Those skilled in the art should appreciate that any embodiment built based on ideas of the disclosure should not be beyond the scope covered by the following technical solution.

The user name is obtained in response to the wireless communication hotspot creation instruction. The hotspot name is obtained by encrypting the obtained user name. The wireless communication parameters for the obtained hotspot name are configured to establish the wireless communication hotspot. The wireless communication unit 15 is controlled to broadcast the wireless communication connection invitation via the established wireless communication hotspot, so as to enable the hotspot connection end 2 to access the established wireless communication hotspot by decrypting the hotspot name.

The wireless communication hotspot creation is implemented step by step in combination with the embodiment of the disclosure as follows.

Step 10: The hotspot creation module 11 responds to the wireless communication hotspot creation instruction to obtain the user name.

In the embodiment, the hotspot creation module 11 responds to the wireless communication hotspot creation instruction according to the steps of providing the wireless communication hotspot creation instruction activating interface (e.g., the menu option or the desktop icon) and detecting and responding to the wireless communication hotspot creation instruction which is issued by the user through the wireless communication hotspot creation instruction activating interface. In other embodiments of the disclosure, the hotspot creation module 11 responds to the wireless communication hotspot creation instruction according to any other applicable steps.

In the embodiment, the hotspot creation module 11 obtains the user name according to the steps of obtaining the saved default user name and providing options so as to set the user name when the user name is set for the first time or needs to be reset.

Step 11: The hotspot creation module 11 encrypts the obtained user name to obtain the hotspot name.

Preferably, for better ensuring the security of the established wireless communication hotspot, the hotspot creation module 11 encrypts the obtained user name to obtain the hotspot name according to the steps of adding the specific identity recognition mark to the obtained user name so as to obtain a character string with the identity recognition mark and encrypting the character string with the identity recognition mark to obtain the encrypted character string (namely the hotspot name).

Step 12: The hotspot creation module 11 configures the wireless communication parameters for the obtained hotspot name so as to establish the wireless communication hotspot (e.g., the Wi-Fi hotspot).

In the embodiment, the wireless communication parameters include the connection password, the connection authentication method and so on. In other embodiments of the disclosure, the wireless communication parameters include any other applicable parameters.

Step 13: The hotspot creation module 11 controls the wireless communication unit 15 to broadcast the wireless communication connection invitation via the established wireless communication hotspot, so as to enable the hotspot connection end 2 to access the established wireless communication hotspot by decrypting the hotspot name.

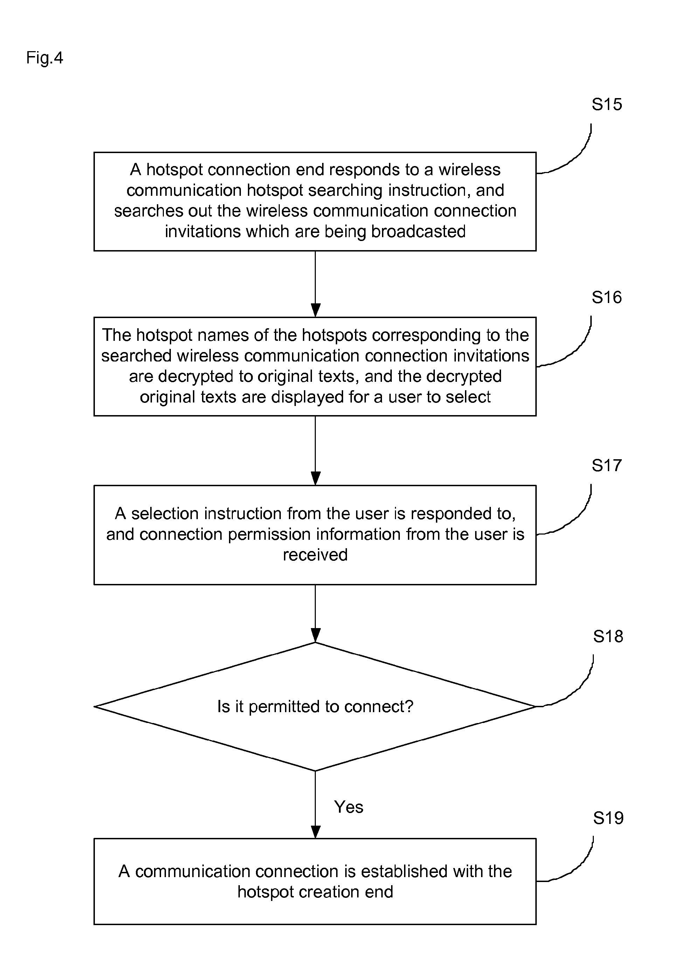

Fig. 4 is a specific implementation flowchart of the wireless communication hotspot connection method according to an embodiment of the disclosure.

Note that, the flowchart shown in Fig. 4 is only a preferred embodiment. Those skilled in the art should appreciate that any embodiment built based on ideas of the disclosure should not be beyond the scope covered by the following technical solution.

The wireless communication unit 25 is controlled to search for the wireless communication connection invitations which are being broadcasted, in response to the wireless communication hotspot searching instruction. The hotspot names of the wireless communication hotspots corresponding to the searched wireless communication connection invitations are decrypted to the original texts, and the decrypted original texts are displayed for the user to select. In response to the selection instruction of the user to the displayed original texts of the hotspot names, the connection permission information of the user is received. According to the received connection permission information, it is determined whether the hotspot connection end 2 has permission to establish the communication connection with the wireless communication hotspot corresponding to the selected original text of the hotspot name. The wireless communication unit 25 is controlled to establish the communication connection with the wireless communication hotspot corresponding to the selected original text of the hotspot name when the hotspot connection end has permission to establish the communication connection with the wireless communication hotspot corresponding to the selected original text of the hotspot name.

The implementation of the wireless communication hotspot connection step by step in combination with the embodiment of the disclosure is as follows.

Step 15: The hotspot connection module 21 responds to the wireless communication hotspot searching instruction, and controls the wireless communication unit 25 to search for the wireless communication connection invitations which are being broadcasted.

In the embodiment, the hotspot connection module 21 responds to the wireless communication hotspot searching instruction according to the steps of providing the wireless communication hotspot searching instruction activating interface (e.g., the menu option or the desktop icon) and detecting and responding to the wireless communication hotspot searching instruction which is issued by the user via the wireless communication hotspot searching instruction activating interface. In other embodiments of the disclosure, the hotspot connection module 21 responds to the wireless communication hotspot searching instruction according to any other applicable steps.

Step 16: The hotspot connection module 21 decrypts the hotspot names of the wireless communication hotspots corresponding to the searched wireless communication connection invitations to the original texts, and displays the decrypted original texts for the user to select.

Preferably, for better ensuring the security of the wireless communication hotspot connection, the hotspot connection module 21 displays the decrypted original texts for the user to select according to the steps of determining whether the decrypted original texts include the specific identity recognition mark and when the decrypted original texts include the specific identity recognition mark, displaying the decrypted original texts for the user to select; or, when the decrypted original texts do not include the specific identity recognition mark, not displaying the decrypted original texts.

Step 17: The hotspot connection module 21 responds to the selection instruction of the user to the displayed original texts of the hotspot names, and receives the connection permission information of the user. The connection permission information includes, but is not limited to, the connection password.

Step 18: The hotspot connection module 21 determines, according to the received connection permission information, whether the hotspot connection end 2 has permission to establish the communication connection with the wireless communication hotspot corresponding to the selected original text of the hotspot name.

When the hotspot connection end has permission to establish the communication connection with the wireless communication hotspot corresponding to the selected original text of the hotspot name, Step 19 is executed. Otherwise, when the hotspot connection end does not have permission to establish the communication connection with the wireless communication hotspot corresponding to the selected original text of the hotspot name, Step 20 or Step 21 (not shown in the figures) is executed.

Step 19: The hotspot connection module 21 controls the wireless communication unit 25 to establish the communication connection with the wireless communication hotspot corresponding to the selected original text of the hotspot name.

In the embodiment, the hotspot connection module 21 determines whether the hotspot connection end 2 has permission to establish the communication connection with the wireless communication hotspot corresponding to the selected original text of the hotspot name by analysing whether the received connection permission information matches with the wireless communication parameters of the wireless communication hotspot corresponding to the selected original text of the hotspot name.

Step 20: When the connection permission information of the user is received less than the pre-set number of times, Step 17 is executed. Otherwise, when the connection permission information of the user is received the pre-set number of times, the hotspot connection module 21 waits for responding to the new selection instruction of the user to the displayed original texts of the hotspot names.

Step 21: The hotspot connection module 21 directly waits for responding to the new selection instruction of the user to the displayed original texts of the hotspot names.

Those disclosed above are only the preferred embodiments of the disclosure and not intended to limit the scope of the disclosure. Any equivalent replacements of the structures or process based on contents of the specification and accompanying drawings of the disclosure, as well as direct or indirect application in other related technical fields shall fall within the scope of the disclosure.

## Claims

1. A method for creating a wireless communication hotspot, comprising:
responding to a wireless communication hotspot creating instruction to obtain a user name;
encrypting the obtained user name to obtain a hotspot name;
configuring wireless communication parameters for the obtained hotspot name to establish a wireless communication hotspot; and
broadcasting a wireless communication connection invitation via the established wireless communication hotspot, so as to enable a hotspot connection end to access the established wireless communication hotspot by decrypting the hotspot name.

2. The method according to claim 1, wherein the step of responding to the wireless communication hotspot creation instruction comprises:
providing a wireless communication hotspot creation instruction activating interface; and
detecting and responding to the wireless communication hotspot creation instruction which is issued by the user through the wireless communication hotspot creation instruction activating interface.

3. The method according to claim 1, wherein the step of encrypting the obtained user name to obtain the hotspot name comprises:
adding a specific identity recognition mark to the obtained user name so as to obtain a character string with the identity recognition mark; and
encrypting the character string with the identity recognition mark to obtain the hotspot name.

4. The method according to claim 1, wherein the step of obtaining the user name comprises:
obtaining the saved default user name; and
when the user name is set for the first time or needs to be reset, providing options so as to set the user name.

5. A hotspot creation end, comprising:
a wireless communication unit configured to send and/or receive a wireless communication signal;
an input/output unit configured to provide a human-computer interaction interface for a user to input an instruction, and for outputting and displaying response data of the hotspot creation end to the instruction input by the user;
a hotspot creation module configured to respond to a wireless communication hotspot creation instruction to obtain a user name, encrypt the obtained user name to obtain a hotspot name, configure wireless communication parameters for the obtained hotspot name to establish a wireless communication hotspot, and control the wireless communication unit to broadcast a wireless communication connection invitation via the established wireless communication hotspot, so as to enable a hotspot connection end to access the established wireless communication hotspot by decrypting the hotspot name; and
a processing unit configured to call and execute the hotspot creation module.

6. A method for connecting to a wireless communication hotspot, comprising:
responding to a wireless communication hotspot searching instruction to search out one or more wireless communication connection invitations which are being broadcasted;
decrypting one or more hotspot names of one or more wireless communication hotspots corresponding to the one or more searched wireless communication connection invitations to original texts, and displaying the decrypted original texts for a user to select;
responding to a selection instruction from the user to the displayed original texts of the hotspot names;
receiving connection permission information from the user;
determining, according to the received connection permission information, whether it is permitted to establish a communication connection with the wireless communication hotspot corresponding to the selected original text of the hotspot name; and
establishing the communication connection with the wireless communication hotspot corresponding to the selected original text of the hotspot name when it is permitted to establish the communication connection with the wireless communication hotspot corresponding to the selected original text of the hotspot name.

7. The method according to claim 6, wherein when it is not permitted to establish the communication connection with the wireless communication hotspot corresponding to the selected original text of the hotspot name, the method further comprises:
when the connection permission information of the user is received less than a pre-set number of times, turning to the step of receiving the connection permission information of the user; or
when the connection permission information of the user is received the pre-set number of times, waiting for responding to a new selection instruction of the user to the displayed original texts of the hotspot names; or
directly waiting for responding to the new selection instruction of the user to the displayed original texts of the hotspot names.

8. The method according to claim 6, wherein the step of displaying the decrypted original texts for the user to select comprises:
determining whether the decrypted original texts include respective specific identity recognition marks;
displaying the decrypted original texts with the specific identity recognition marks for the user to select; or, not displaying the decrypted original texts without the specific identity recognition marks.

9. The method according to claim 6, wherein the step of responding to the wireless communication hotspot searching instruction comprises:
providing a wireless communication hotspot searching instruction activating interface; and
detecting and responding to the wireless communication hotspot searching instruction which is issued by the user through the wireless communication hotspot searching instruction activating interface.

10. A hotspot connection end, comprising:
a wireless communication unit configured to send and/or receive a wireless communication signal;
an input/output unit configured to provide a human-computer interaction interface for a user to input an instruction, and for outputting and displaying response data of the hotspot connection end to the instruction input by the user;
a hotspot connection module configured to respond to a wireless communication hotspot searching instruction, control the wireless communication unit to search out one or more wireless communication connection invitations which are being broadcasted, decrypt one or more hotspot names of one or more wireless communication hotspots corresponding to the one or more searched wireless communication connection invitations to original texts, display the decrypted original texts for a user to select, respond to a selection instruction of the user to the displayed original texts of the hotspot names, receive connection permission information of the user, determine, according to the received connection permission information, whether it is permitted to establish a communication connection with the wireless communication hotspot corresponding to the selected original text of the hotspot name, and control the wireless communication unit to establish the communication connection with the wireless communication hotspot corresponding to the selected original text of the hotspot name when it is permitted to establish the communication connection with the wireless communication hotspot corresponding to the selected original text of the hotspot name; and
a processing unit configured to call and execute the hotspot connection module.
